**Europäisches Patentamt**

**European Patent Office**

**Office européen des brevets**

(19)

(11) Numéro de publication : **0 306 355 B1**

(12) # FASCICULE DE BREVET EUROPEEN

(45) Date de publication du fascicule du brevet :
**15.05.91 Bulletin 91/20**

(51) Int. Cl.⁵ : **B64C 13/08, B64D 31/06**

(21) Numéro de dépôt : **88401609.8**

(22) Date de dépôt : **24.06.88**

(54) **Système associé de commandes de compensateur et de puissance intégralement automatiques, destiné à l'Aviation Générale Commerciale et d'Affaires.**

(30) Priorité : **14.08.87 FR 8711590**

(43) Date de publication de la demande :
**08.03.89 Bulletin 89/10**

(45) Mention de la délivrance du brevet :
**15.05.91 Bulletin 91/20**

(84) Etats contractants désignés :
**AT BE CH DE ES GB GR IT LI LU NL SE**

(56) Documents cités :
**EP-A- 0 109 858**
**DE-A- 2 457 212**
**FR-A- 2 570 672**
**US-A- 4 431 149**
**US-A- 4 651 954**

(73) Titulaire : **Egalgi, Dominique Charles**
**2 rue Hector Berlioz Immeuble Symphonie**
**Bobigny (Seine Saint Denis) (FR)**

(72) Inventeur : **Egalgi, Dominique Charles**
**2 rue Hector Berlioz Immeuble Symphonie**
**Bobigny (Seine Saint Denis) (FR)**

(74) Mandataire : **Cabinet Pierre HERRBURGER**
**115, Boulevard Haussmann**
**F-75008 Paris (FR)**

## Description

La présente invention a pour objet un double système de commande automatique de compensateur et de puissance pour l'aviation générale commerciale et d'affaires.

On connaît déjà dans le transport commercial lourd des dispositifs de contrôle et d'intégration de poussée très complexes et sophistiqués utilisant des calculateurs redondants seuls en mesure de garantir la précision compatible avec l'exécution d'approches et d'atterrissage catégorie III par visibilité faible voire nulle. Ainsi, l'A.T.T. (atterrissage tous temps) monté sur Caravelle, l'automanette équipant l'Airbus et le "Digital Flight System" équipant les D.C. 9 et 10 sont des systèmes très spécialisés dans les phases d'atterrissage et de décollage. Pour le vol proprement dit, la présence d'un mécanicien naviguant sur les avions a jusqu'ici fait porter l'effort dans la technique antérieure, sur les phases plus critiques ci-dessus rappelées. Bien que fiables et performants, ces différents systèmes doivent être initialisés avant chaque vol, et leurs mémoires, sensibles aux pannes de génération électrique, doivent être alimentées par de nombreux paramètres tels que la masse de l'appareil à l'atterrissage, le rapport de centrage, l'orientation et la force du vent éventuellement des cisaillements de vent, l'altitude de la piste d'atterrissage

Il restait donc un progrès à accomplir dans le sens d'une automatisation totale et d'une mémorisation permanente et ineffaçable des différentes vitesses à respecter par les pilotes : en particulier, pour les plus inexpérimentés d'entre eux, ceux de l'aviation générale dont les connaissances, très souvent lacunaires, sont la cause de survitesses préjudiciables à la cellule et aux propulseurs des aéronefs. Il y avait donc une recherche à conduire afin d'aboutir à une automatisation intégrale de la conduite de puissance, avec paradoxalement une simplification par rapport à la technique antérieure inadaptée à l'aviation générale, à l'exiguïté de ses cockpits, à la modicité de ses budgets, et à l'inexpérience de ses pilotes. Simplification devant amener une diminution de l'encombrement de la consommation électrique, des contraintes de mises en mémoire et des coûts car les dispositifs de la technique antérieure représentent plusieurs fois la valeur d'un monomoteur évolué, ce qui, outre les conditions techniques ci-dessus en interdisait l'implantation sur les appareils de l'aviation générale et d'affaires.

En ce qui concerne la commande de compensateur automatique, elle comporte une innovation sans précédent. Dans la technique antérieure, les appareils les plus évolués offraient au pilote un double inverseur point milieu permettant de manoeuvrer sans le toucher, le disque de commande du compensateur. Cet inverseur à point milieu obligeait ainsi le pilote par pressions successives sur la portion cabrer ou piquer de l'inverseur, à rechercher la position d'équilibre de la gouverne compensée, diminuant puis supprimant l'effort produit par le pilote sur l'organe de commande.

Il convenait de rechercher une automatisation totale du processus de compensation de gouverne en supprimant la commande à poussoir qui existe sur les montants des volants commandant de bord ou copilote sur les avions les plus évolués, et sans rajouter d'organes de commande sur les appareils les plus simples, soit 84 % du parc d'aéronefs.

Pour remédier aux inconvénients susmentionnés des dispositifs connus, on a déjà proposé un double système de commande intégralement automatique, l'un de compensateur dénommé A.F.C., l'autre de puissance désigné A.E.D., décrits dans le brevet français 2 570 672, qui tout en présentant un très faible encombrement, une très grande simplicité et un faible coût, assure avec précision, le fonctionnement totalement automatique des deux commandes précitées en évitant les contraintes et inconvénients des dispositifs antérieurs.

A cette fin, le dispositif, objet de la première partie du brevet français 2 570 672 désigné A.F.C., est remarquable en ce qu'il supprime totalement, pour l'équipage la recherche du point d'équilibre de la gouverne dont les organes de commande sont dotés de l'A.F.C. L'implantation du capteur-comparateur de forces, inverseur unipolaire à point milieu est parfaitement adaptée aux avions à commandes rigides et à câbles ce qui lui donne vocation à équiper tous les appareils de l'aviation générale mono et multimoteurs. Ce dispositif unitaire et compact a pour avantage de concentrer un double capteur-comparateur de forces, inverseur unipolaire à point milieu présentant une double sécurité mécanique et une protection électrique.

Dans un mode de réalisation avantageux, le capteur-comparateur de forces, inverseur unipolaire à point milieu relié à la masse, interdit tout court-circuit au sein du dispositif au repos comme en fonctionnement, en supprimant l'inverseur existant sur les avions les mieux équipés, et ne créant aucun organe de commande sur les avions les plus simples.

Grâce à l'invention, l'équipage est totalement affranchi de la recherche du point d'équilibre de la gouverne que l'A.F.C. réalise absolument seul sans toutefois supprimer l'effort initialement produit par les pilotes, leur permettant de bien doser leur action sur les commandes volant ou palonnier. A l'allégement du plan de charge du pilote s'ajoute la diminution des efforts fournis tant par celui-ci que par le pilote automatique et la réduction systématique des contraintes sur les circuits de commande et gouvernes.

Outre les avantages susmentionnés, le dispositif décrit dans le brevet français 2 570 672 constitue la base du système de validation des ordres donnés à la commande de puissance par l'automatisme objet de la seconde partie de ce brevet français dénommée A.E.D. Chaque changement d'assiette nécessite une adaptation du régime moteur.

Ainsi, dès que l'inverseur unipolaire de l'A.F.C. transmet un signal attestant que le pilote commence à afficher un changement d'assiette, l'A.F.C. est prêt à valider les ordres de l'A.E.D. au micromoteur de la commande de puissance pour deux minutes, qui suffisent à l'adaptation de la puissance à la nouvelle assiette et à la stabilisation des paramètres.

Dans un mode de réalisation avantageux, la commande de puissance automatique selon la seconde partie du brevet français 2 570 672 est constituée à l'intérieur de la référence anémométrique d'une couronne de mémorisation et de transfert automatique de vitesses de quinze dixièmes de millimètre d'épaisseur située immédiatement après le cadran gradué de l'instrument et mobile autour de l'axe de rotation de l'aiguille dudit instrument grâce à trois galets de guidage dont un d'entraînement directement actionné par un micromoteur.

Avantageusement, la couronne assure simultanément la fixation et le positionnement précis de la rampe de détection, la mémorisation permanente de toutes les vitesses de montée, de croisière, de descente et d'approche ainsi que le transfert automatique de l'une à l'autre sur ordre du pilote formulé à partir de deux poussoirs montés sur le volant.

Grâce au brevet français 2 570 672, une mémorisation permanente des différentes vitesses est assurée par gravure au dos de la couronne susmentionnée de secteurs cuivrés espacés de quinze millimètres et constituant les secteurs de transfert entre deux vitesses.

Deux aiguilles métalliques souples diamétralement opposées constituent les têtes de lecture de la mémoire permanente comportant deux séquences distinctes de vitesses mémorisées : séquence accélération et séquence décélération entre la vitesse à ne jamais dépasser (V.N.E.) et vitesse d'approche initiale (1,2 VS1).

Le dispositif décrit dans le brevet français 2 570 672 inclus ici à titre de référence a pour avantage d'être performant, d'un faible encombrement, d'une grande simplicité et d'un faible coût ; il présente, toutefois, l'inconvénient d'être sensible aux turbulences.

L'expérience a en effet montré qu'en turbulences, le capteur-comparateur de forces subissait en position verticale les accélérations positives et négatives imprimées à l'avion par les turbulences.

La présente invention a pour objet de remédier à ces inconvénients en créant une variante du capteur-comparateur de forces pouvant être utilisée dans un double système de commandes automatiques de compensateur et de puissance pour l'aviation générale, commerciale et d'affaires.

A cet effet, la présente invention concerne un système associé de commandes de compensateur et de puissance assurant dans un avion le réglage simultané et automatique du compensateur et de la puissance du moteur, qui comprend :

a) un capteur-comparateur à double cylindre comportant :

– deux noyaux coulissants dont l'un est relié aux gouvernes de profondeur et l'autre au manche de l'avion ;

– des contacts entre chaque noyau et le double cylindre, ces contacts étant reliés à un moteur d'entraînement du compensateur pour modifier automatiquement l'équilibrage automatique de l'avion lorsqu'un changement d'assiette de l'avion est commandé par le pilote et jusqu'à l'annulation de tout effort appliqué au manche à balai et cela afin de garantir une totale insensibilité aux accélérations tridimensionnelles dues à des turbulences même très sévères ;

b) un anémomètre constituant une référence de vitesse pour commander la régulation de puissance du moteur de l'avion, cet anémomètre comportant :

– un disque à double fonction de mémorisation de la régulation opto-électronique infrarouge et le transfert automatique de la commande de vitesse, ce disque étant situé derrière le cadran gradué de l'anémomètre et supportant des diodes infrarouges et des photodétecteurs qui coopèrent avec l'aiguille de l'anémomètre ;

– un disque à secteur cuivré coopérant avec deux contacts (T.up et T.down) pour l'augmentation et la diminution de la puissance du moteur de l'avion et pour la régulation de la commande automatique de la vitesse ;

– des galets de guidage pour la rotation du disque à secteur cuivré autour de l'aiguille de l'anémomètre ;

– un moteur pour l'entraînement en rotation de l'un de ces galets et du disque à secteur cuivré ;

– deux boutons poussoirs pour l'alimentation de ce moteur et pour transmettre les commandes d'accélération et de décélération données par le pilote ;

– des moyens de temporisation pour maintenir l'alimentation du moteur pendant un temps prédéterminé.

Les caractéristiques du dispositif qui fait l'objet de la présente invention seront décrites plus en détail en se référant aux dessins annexés.

– la figure 1 est une vue principale du senseur, double cylindre capteur-comparateur de forces ;

– la figure 2 est une vue en coupe suivant A-A de la figure 1, les noyaux du capteur-comparateur de force étant représentés dans leur position de repos correspondant à une absence de commande de changement d'altitude par le pilote de l'avion ;
– la figure 3 est une vue en coupe transversale suivant B-B de la figure 1 ;
– la figure 4 est une autre vue en coupe suivant A-A de la figure 1, les noyaux du capteur-comparateur de force étant représentés dans leur position correspondant à une commande de compression appliquée par le pilote sur le manche de commande de direction de l'avion ;
– la figure 5 est un schéma de la seconde partie du perfectionnement reproduisant l'architecture du nouveau système de conduite de puissance automatique totalement insensible aux turbulences ;
– les figures 6 et 7 montrent le détail de l'implantation de la détection optoélectronique infrarouge à l'intérieur de la référence anémométrique du système de mémorisation et de régulation des vitesses totalement insensible aux turbulences ;
– la figure 6a est une vue de gauche de la figure 6.

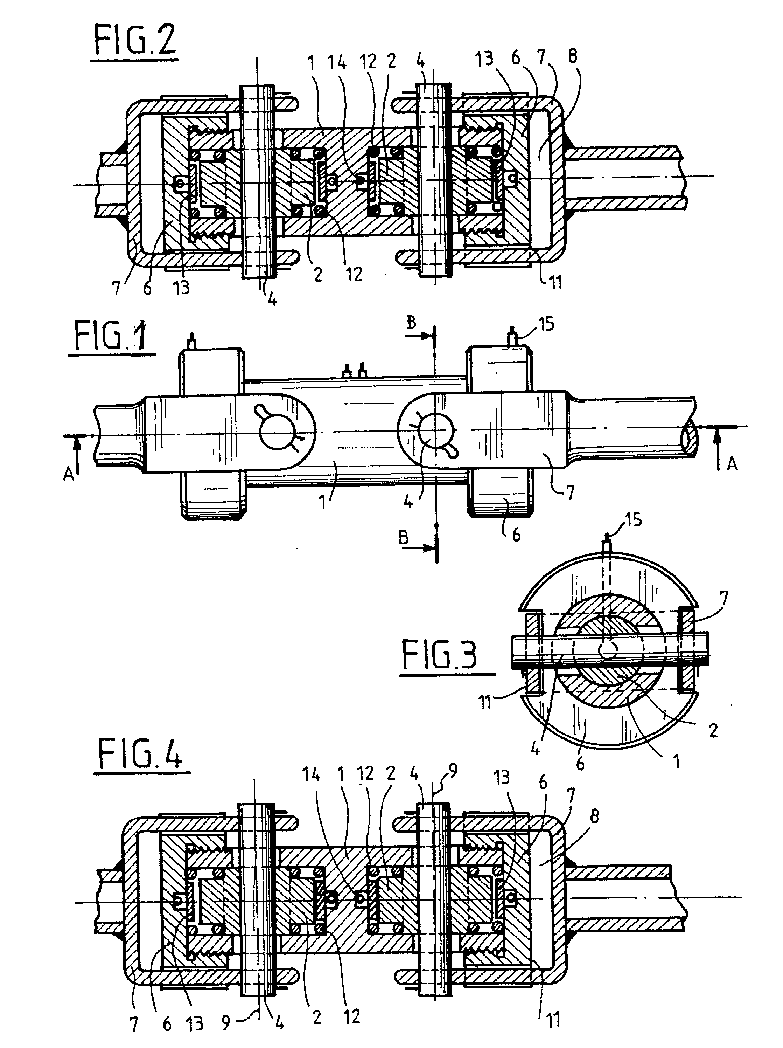

Le dispositif de contrôle automatique de compensateur selon la première partie de l'invention montré par les figures 1 à 3, comporte un double cylindre capteur-comparateur de forces 1 contenant les deux noyaux 2 maintenus dans une position centrale par les ressorts 12. Chaque cylindre est fermé par un couvercle 6 guidé en rotation, guidant lui-même en translation la fourche de commande 7, cette dernière étant solidaire de l'un des noyaux 2 des cylindres capteur-comparateur de forces, grâce à une tige de transmission de force 4.

Les fourches de commande 7 servent à assurer la transmission des forces appliquée par le pilote, et celles opposées par la gouverne.

Quatre câbles électriques gainés 15, connectés chacun en 14 à une plaque de contact 13, émergent du même côté des cylindres capteur-comparateur de forces 1 et de leur couvercle 6.

Alésés selon l'axe horizontal de transmission des forces 8 et filetés à leur extrémité, les cylindres capteurs 1 sont fermés chacun par un couvercle 6 à double méplat fraisé 11.

La principale caractéristique du senseur est de subordonner la transmission d'un ordre de compensation à une double détection simultanée, une par capteur, symétrique par rapport au centre de gravité du senseur (voir figure 4).

Cette caractéristique a pour effet lorsque le senseur travaille en position verticale de rendre le système de compensation automatique totalement insensible aux turbulences verticales puisqu'en effet celles-ci impriment au senseur des débattements dissymétriques par rapport au centre de gravité.

Le système de compensation automatique, objet de la première partie du perfectionnement, est rendu de ce fait totalement insensible aux turbulences.

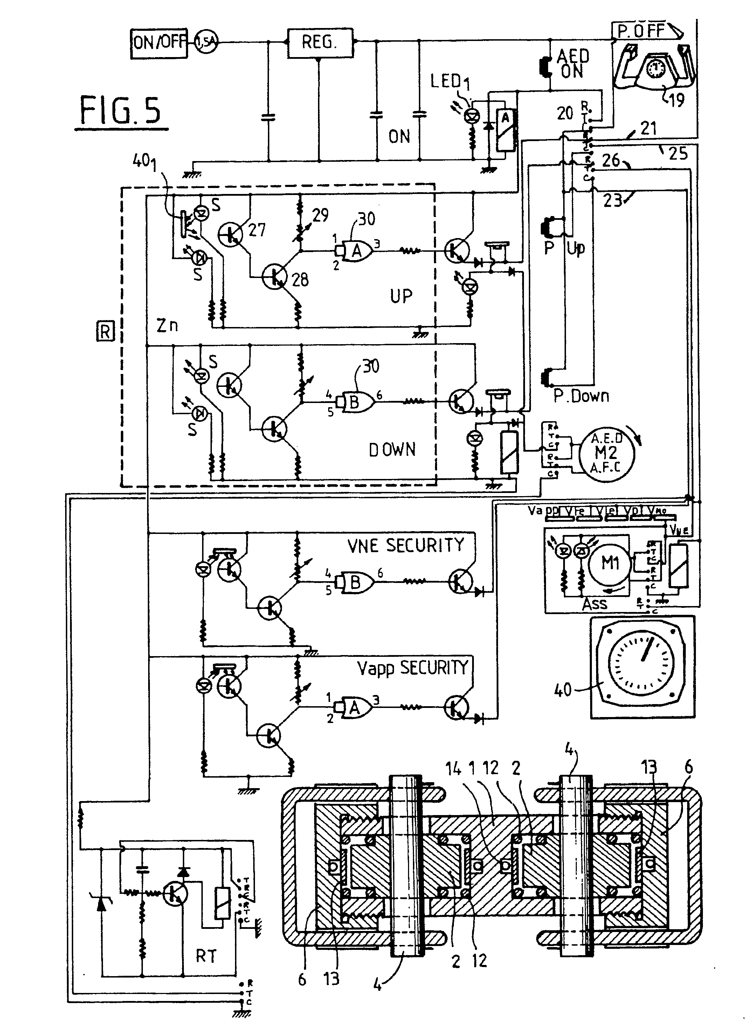

Figure 5, le schéma général de la deuxième partie de l'invention correspondant à la commande de puissance automatique désignée A.E.D. comprend un circuit d'alimentation 9 et 5 Volts comportant un interrupteur général ON/OFF, un fusible 1,5 ampère, un interrupteur à poussoir (AED.ON) enclenchant la conduite automatique, une rampe de détection et de régulation à deux étages R, deux circuits de sécurité VNE et Vapp, VNE signifie vitesse à ne jamais dépasser et Vapp signifie vitesse d'approche initiale, en-deçà de laquelle l'A.E.D. refusera de descendre (Vapp = 1,2 VS1 dans laquelle VS1 est la vitesse de décrochage). Un asservisseur Ass qui entraîne la rampe R et mémorise toutes les vitesses utiles et assure, sur ordre du pilote, le transfert automatique de l'une des vitesses à l'autre, deux poussoirs à cabrer P.up et à piquer P.down montés sur le volant.

L'interrupteur A.E.D. sur marche, les poussoirs à cabrer et à piquer à grand débattement montés sur le montant gauche du volant "commandant de bord" 19 (figure 5) très près du pouce, permettant au pilote d'afficher augmentation ou diminution de puissance (nombre de tours pour les pas fixes, ou pression d'admission pour les autres), et d'effectuer des ajustements sans avoir à manipuler la manette correspondante, car son blocage est automatique dans chaque nouvelle position.

Le déclenchement de la phase automatique est engagé sur pression du "poussoir A.E.D." monté sur l'anémomètre 40 avec une diode électroluminescente (LED1). Cette diode s'allume dès la position automatique enclenchée, ce pour 2 minutes, grâce au relais A auto-alimenté en 20. Le système reste enclenché après que le pilote ait relâché sa pression sur le poussoir. Pour annuler l'automatisation en cas d'urgence et en fin d'utilisation, un poussoir arrêt P.off placé sur le volant 19 dans le prolongement du pouce gauche, coupe l'alimentation du système automatique, provoquant le décollement du relais A.

Une pression prolongée sur le poussoir arrêt assure l'alimentation directe et immédiate du micromoteur M2 actionnant la manette, dans le sens d'une remise de gaz.

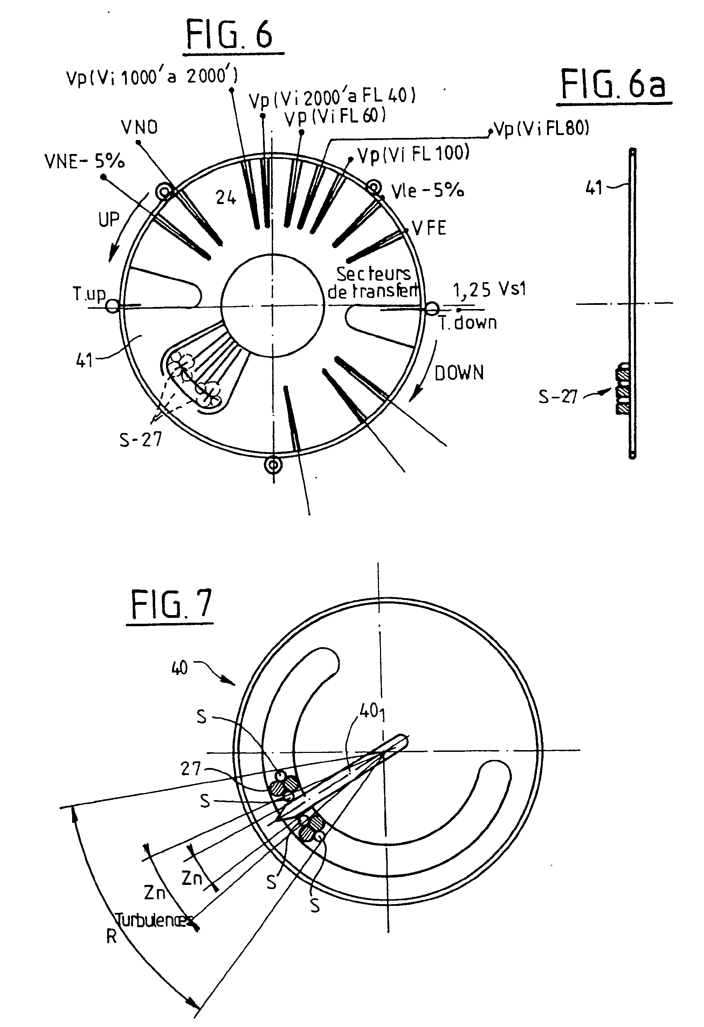

En position automatique, les contacts 21 et 23 du relais A, adressent le courant envoyé par le poussoir à cabrer ou à piquer au micromoteur de l'asservisseur Ass, entraînant le disque à double fonction 41 de l'anémomètre 40. Il assure d'une part la fixation et le positionnement des quatre diodes infrarouges S et des deux photocapteurs 27 (chacun en double) de la rampe R de la figure 7 de sorte à ménager une zone neutre Zn dans laquelle l'aiguille $40_1$ ne réfléchit aucun rayonnement infrarouge, d'autre part, au dos (figure 6) du disque, se trouvent des secteurs cuivrés gravés 24, espacés de 15/10ème de mm qui assurent la mémorisation permanente et ineffaçable des différentes vitesses VNE... VFE de l'avion (VNE signifie vitesse à ne jamais dépasser ; VMO signifie vitesse normale en vol, VP signifie vitesse propre de l'avion ;

VLE signifie vitesse d'atterrissage train sorti ; VFE vitesse maximum volets sortis).

Le courant adressé par le poussoir à cabrer et le poussoir à piquer parcourt soit le câble 25 ou le câble 26 correspondant au circuit accélération ou décélération et enclenche le micromoteur M1 de l'asservisseur Ass afin qu'il déplace par le biais d'un réducteur, le disque 41 et donc les diodes et les photodétecteurs 27 de la rampe de détection et de régulation R.

Dès que le disque est en mouvement, les têtes de lecture des mémoires T.up accélération et T.down décélération se trouvent sur un secteur cuivré 24 relié au pôle positif de l'alimentation qui prend le relais des poussoirs à cabrer P.up ou à piquer P.down que le pilote peut alors relâcher moins d'une seconde après le début de la pression assurant la transmission de l'ordre à accélérer ou décélérer donné par le pilote qui garde en toute hypothèse le pouvoir de décision. La régulation à la nouvelle vitesse est effective pendant deux minutes.

Une fois la décision prise par le pilote, l'ordre doit être nettement formulé par une pression sur les poussoirs à grand débattement à cabrer ou à piquer à double système de déclenchement.

Lorsque l'A.E.D. est sur marche, la rampe de détection et de régulation R est activée dans les conditions ci-après.

Elle réagit en fonction des indications de la référence anémométrique fournie par l'aiguille $40_1$ de l'anémomètre 40 dont le seul passage quelques millimètres au-dessus de la rampe de détection R suffit à réfléchir le rayonnement émis par les quatre sources S réparties deux par deux autour de chaque capteur infrarouge 27 réalisé comme précisé aux figures 6, 6a et 7.

Cette rampe R ainsi constituée de quatre sources et de deux capteurs comporte deux étages de détection identiques à cabrer et à piquer correspondant respectivement à l'augmentation et à la diminution de la puissance assurée directement par un micro-moteur muni d'un réducteur attaquant le disque d'entraînement de la manette par un système irréversible constituant la base du frein automatique.

Ce système interdit tout déplacement non commandé de la manette par la main du pilote ou le micromoteur. Si l'aiguille $40_1$ se trouve dans la zone neutre Zn dont le milieu matérialise la ligne de foi (voir figure 7), elle se trouve entre les deux étages de détection et de régulation et aucune réflexion n'active les étages de détection et la position du micromoteur est stabilisée. Si l'assiette change, la vitesse diminuant ou augmentant, l'aiguille $40_1$ quitte la zone neutre ZN pour se placer sous l'étage de détection augmentation si la vitesse diminue et sous l'étage diminution si la vitesse augmente. La correction commence en moins de 150 µS ce qui est très satisfaisant pour un système aussi simple.

Cette correction permet de stabiliser l'écart entre la ligne de foi du capteur S-27 et l'axe de l'aiguille $40_1$ puis de le supprimer totalement jusqu'à ce que l'axe de l'aiguille et celui de la zone neutre Zn soient parfaitement superposés. La puissance automatiquement affichée correspond alors parfaitement à la vitesse sélectionnée compte tenu de l'assiette

Les corrections ne sont nécessaires que s'il y a changement d'assiette à défaut de quoi les paramètres sont stabilisés. Ces variations d'assiette sont affichées par le pilote grâce à la commande de profondeur par action sur le manche. Dès qu'il exerce une action sur cette commande, le capteur de forces (figures de 1 à 4) transmet un ordre avant de commencer à déplacer la gouverne de profondeur qui entraînera le changement d'assiette nécessitant une adaptation de puissance.

L'A.F.C. constitue la base du système de validation des ordres donnés à la commande de puissance. En effet, dès que le pilote commence à afficher un changement d'assiette, l'A.F.C. est prêt à valider les ordres de l'A.E.D. à la commande de puissance pour deux minutes, qui suffisent à l'adaptation de la puissance à la nouvelle assiette et à la stabilisation des paramètres. A la fin de cette période de deux minutes, l'A.F.C. ne validera plus aucun ordre en direction du micromoteur de la manette de puissance car la vitesse est après deux minutes bien stabilisée. Dès qu'un nouveau changement d'assiette est opéré, l'A.F.C. valide les ordres d'ajustement pendant deux minutes.

Les sécurités VNE et Vapp sont actives en permanence quelle que soit la position sélectionnée manuelle ou automatique et dérogent au principe de validation par l'A.F.C.

Le phototransistor 27 est monté en Darlington avec le transistor 28 dont le gain en tension est réglé par l'ajustable 29 (l'unique réglage). La configuration retenue permet d'obtenir une très bonne sensibilité du montage.

La tension collecteur de 28 attaque la porte logique 30 (circuit intégré 4 001 quadruple OR en CMOS). La sortie de cette porte passe franchement de 0 à 9 Volts et inversement, même quand le signal sur 27 varie lentement.

La tension correspondante attaque à travers une résistance de 10 KΩ la base d'un transistor de commutation dans l'émetteur duquel est insérée la bobine d'un relais et une diode électroluminescente assurant la visualisation du fonctionnement de l'étage – détection amplification commutation.

Ainsi, grâce à la présente invention, on aboutit à une parfaite insensibilité de la conduite de puissance aux turbulences tout en préservant sa simplicité caractérisée par une diminution de l'encombrement de la consommation électrique, des contraintes de mise en mémoire et des coûts.

Ce système de conception nouvelle parfaitement insensible aux accélérations tri-dimensionnelles permet le contrôle total de la puissance à partir du volant avec une nette diminution du plan de charge en vol.

La présente invention n'est pas limité aux exemples de réalisation qui viennent d'être décrits, il est susceptible de modifications et de variantes sans sortir du cadre de la revendication qui suit.

## Revendications

1. Système associé de commandes de compensateur et de puissance assurant dans un avion le réglage simultané et automatique du compensateur et de la puissance du moteur, système caractérisé en ce qu'il comprend :

a) un capteur-comparateur à double cylindre (1) comportant :

– deux noyaux coulissants (2) dont l'un est relié aux gouvernes de profondeur et l'autre au manche de l'avion ;

– des contacts (13) entre chaque noyau et le double cylindre (1), ces contacts étant reliés à un moteur (M2) d'entraînement du compensateur pour modifier automatiquement l'équilibrage automatique de l'avion lorsqu'un changement d'assiette de l'avion est commandé par le pilote et jusqu'à l'annulation de tout effort appliqué au manche à balai et cela afin de garantir une totale insensibilité aux accélérations tridimensionnelles dues à des turbulences même très sévères ;

b) un anémomètre (40) constituant une référence de vitesse pour commander la régulation de puissance du moteur de l'avion, cet anémomètre comportant :

– un disque à double fonction (41) de mémorisation de la régulation opto-électronique infrarouge et le transfert automatique de la commande de vitesse, ce disque étant situé derrière le cadran gradué de l'anémomètre (40) et supportant des diodes infrarouges (S) et des photodétecteurs (27) qui coopèrent avec l'aiguille ($40_1$) de l'anémomètre ;

– un disque à secteur cuivré (24) coopérant avec deux contacts (T.up et T.down) pour l'augmentation et la diminution de la puissance du moteur de l'avion et pour la régulation de la commande automatique de la vitesse ;

– des galets de guidage pour la rotation du disque à secteur cuivré (41) autour de l'aiguille ($40_1$) de l'anémomètre ;

– un moteur (M1) pour l'entraînement en rotation de l'un de ces galets et du disque à secteur cuivré (41) ;

– deux boutons poussoirs (P.up et P down) pour l'alimentation de ce moteur (M1) et pour transmettre les commandes d'accélération et de décélération données par le pilote ;

– des moyens de temporisation (A-RT) pour maintenir l'alimentation du moteur (M1) pendant un temps prédéterminé.

## Ansprüche

1. Verbundenes Steuersystem für Trimmung und Leistung, welches in einem Flugzeug die gleichzeitige und automatische Regelung der Trimmung und der Motorleistung ermöglicht, gekennzeichnet durch folgende Merkmale :

a) eine Erfassungs- und Vergleichseinrichtung mit einem Doppelzylinder (1), welcher umfaßt

– zwei Gleitnocken (2), von denen der eine mit dem Höhenruder und der andere mit dem Seitenruder des Flugzeugs verbunden ist ;

– zwischen jedem Nocken und dem Doppelzylinder (1) vorgesehene Kontakte (13), die mit einem Antriebsmotor (M2) des Trimmers verbunden sind, um automatisch die automatische Trimmung des Flugzeugs zu modifizieren, wenn eine Änderung der Fluglage des Flugzeugs vom Piloten befohlen wird bis zum Aufhören jeglichen Kraftangriffs am Steuerknüppel, um eine vollständige Unempfindlichkeit gegenüber dreidimensionalen Beschleunigungen zu garantieren, die durch selbst schwere Turbulenzen zustande kommen ;

b) ein Anemometer (40), welches eine Geschwindigkeitsbezugsgröße zur Steuerung der Leistungsregelung des Motors des Flugzeugs bildet und folgende Merkmale umfaßt :

– eine Scheibe (41) mit der doppelten Funktion Speicherung der optoelektronischen Infrarot-Steuerung und der automatischen Übertragung die Geschwindigkeitssteuerung, welche Scheibe hinter der Skalenscheibe des Anemometers (40) angeordnet ist und Infrarot-Dioden (S) und Fotodetektoren (27) trägt, die mit dem Zeiger ($40_1$) des Anemometers zusammenwirken ;

– eine verkupferte Sektorscheibe (24), die mit zwei Kontakten (T.up und T.down) zur Erhöhung und Verringerung der Motorleistung des Flugzeugs und zur Regelung der automatischen Geschwindigkeitssteuerung zusammenwirkt ;

– Führungsrollen für die Drehung der verkupferten Scheibe (41) um den Zeiger ($40_1$) des Anemometers ;

– einen Motor (M1) zum Drehantrieb einer der Rollen und der verkupferten Scheibe (41) ;

– zwei Drucktasten (P.up und P.down) zur Betätigung des Motors (M1) und zur Übertragung der Beschleunigungsund Verlangsamungsbefehle des Piloten ;
– Zeitschaltmittel (A-RT) zum Weiterbetrieb des Motors (M1) während einer vorbestimmten Zeit.

time.

## Claims

1. Combined control system for the compensation control surface and for the power ensuring in an aircraft the simultaneous and automatic regulation of the compensation control surface and of the power of the engine, the system being characterised in that it comprises :

a) a double-cylinder sensor-comparator (1) comprising :

– two sliding cores (2), one of which is connected to the pitch control surfaces and the other to the control column of the aircraft ;

– contacts (13) between each core and the double cylinder (1), these contacts being connected to a motor (M2) for driving the compensation control surface to modify automatically the automatic trim of the aircraft when a change of trim of the aircraft is commanded by the pilot and until the neutralisation of any force applied to the control column, in order to ensure a total insensitivity to the three-dimensional accelerations due to even very severe turbulences ;

b) an airspeed indicator (40) constituting a speed reference to command the regulator of the power of the engine of the aircraft, this airspeed indicator comprising :

– a disc (41) for the double function of storage of the infrared optoelectronic regulation and the automatic transfer of the speed command, this disc being situated behind the graduated dial of the airspeed indicator (40) and supporting infrared diodes (S) and photodetectors (27) which cooperate with the needle ($40_1$) of the airspeed indicator ;

– a copper-plated sector disc (24) cooperating with two contacts (T.up and T.down) to increase and to reduce the power of the engine of the aircraft and to regulate the automatic speed control ;

– guide rollers for the rotation of the copper-plated sector disc (41) about the needle ($40_1$) of the airspeed indicator ;

– a motor (M1) to drive in rotation one of these rollers and the copper-plated sector disc (41);

– two push-buttons (P.up and P.down) to feed this motor (M1) and to transmit the acceleration and deceleration commands given by the pilot ; and

– time delay means (A-RT) to maintain the feed to the motor (M1) during a predetermined

# FIG.2

# FIG.1

# FIG.3

# FIG.4

FIG.5

## FIG. 6

Vp(Vi 1000' a 2000')

Vp(Vi 2000'a FL 40)

Vp(Vi FL 60)

Vp(Vi FL 100)

Vp(Vi FL80)

VNO

VNE- 5%

Vle -5%

UP

VFE

24

Secteurs de transfert

T.up

1,25 Vs1

T.down

DOWN

41

S-27

## FIG. 6a

41

S-27

## FIG. 7

40

$40_1$

S

27

S

S

S

Zn

Zn

Turbulences

R